# EUROPÄISCHE PATENTANMELDUNG

(11) **EP 1 219 920 A2**
(43) Veröffentlichungstag der Anmeldung: **03.07.2002**
(21) Anmeldenummer: 01129157.2
(22) Anmeldetag: 08.12.2001
(51) Int. Cl.: G01B 11/00

(54) **Verfahren und Vorrichtung zum Auffinden von Probenbereichen**

(30) Priorität: 30.12.2000 DE 10065784
(71) Anmelder: Leica Microsystems Heidelberg GmbH, 68165 Mannheim (DE)
(72) Erfinder: Knebel, Werner, Dr., 76709 Kronau (DE)
(74) Vertreter: Reichert, Werner F., Dr.

(57) **Zusammenfassung**

Die Erfindung offenbart ein Verfahren zum Auffinden von interessierenden Probenbereichen in einer stimulierbaren mikroskopischen Probe (13), daß durch die Schritte Einbringen (1) von mindestens zwei stimulationsspezifischen Farbstoffen in eine Probe (13), Beleuchten (2) mit mindestens einem Beleuchtungslichtstrahl (7), Auslösen (3) einer Stimulation, Detektion (4) des von den stimulationsspezifischen Farbstoffen ausgehenden Lichtes (16) und Ermitteln (5) der räumlichen Position der Bereiche innerhalb der Probe (13), von denen Licht von zumindest zwei unterschiedlichen Wellenlängen ausgeht, die Emissionswellenlängen der stimulationsspezifischen Farbstoffe sind.

## Beschreibung

Die Erfindung betrifft ein Verfahren zum Auffinden von interessierenden Probenbereichen in einer stimulierbaren mikroskopischen Probe.

Ferner betrifft die Erfindung eine Vorrichtung zum Auffinden von interessierenden Probenbereichen in einer stimulierbaren mikroskopischen Probe.

Bei der Untersuchung mikroskopischer Proben in denen dynamische Prozesse ablaufen, die von außen stimuliert werden können, sind oft einzelne Bereiche der Probe von besonderem Interesse. Die Stimulation kann sich auf das Auslösen, das Beenden oder irgendeine andere Beeinflussung eines Prozesse beziehen.

In der Zellbiologie wird die Weiterleitung von Informationen von Zelle zu Zelle untersucht. Die miteinander verästelten Nervenzellen stehen untereinander in Kontakt. An den Kontaktpunkten sind die sog. Spines, die auf den Dentriten der Zellen zu finden sind, mit den Synapsen einer anderen Zelle verknüpft. Eine Methode zum Auffinden der Kontaktpunkte beruht darauf, die Nervenzellen einer Probe mit einem Farbstoff, beispielsweise einem Kalzium-Indikator, wie Calcium-Green, zu präparieren, der bei Beleuchtung mit Licht einer geeigneten Anregungswellenlänge ein charakteristisches Fluoreszenzlicht aussendet. Durch Stimulation mit einem Spannungspuls, der an das Zellgewebe angelegt wird, kann der Übergang in ein Aktionspotential induziert werden, das sich von Zelle zu Zelle fortpflanzt. Dies geht mit dem Einströmen von Kalzium in die Spines einher, was durch den Kalzium-Indikator nachweisbar ist. Ein solche Methode ist aus dem Artikel "Ca²⁺ Fluorescence Imaging with Pico- and Femtosecond Two-Photon Excitation: Signal and Photodamage", Helmut J. Koester et al., Biophysical Journal, Vol. 77, Oct. 1999, 2226-2236, bekannt.

Die bekannte Methode hat den Nachteil, daß die Kontaktstellen nicht zuverlässig und reproduzierbar lokalisiert werden können; denn durch die zeitlich kurzen Prozesse an den Kontaktstellen werden nur wenige Indikatormoleküle angeregt und daher nur wenige charakteristische Photonen erzeugt, so daß nur ein sehr schlechtes Signal-zu-Rausch-Verhältnis erreicht wird. Das Auffinden der Kontaktstellen ist daher sehr langwierig und erfordert vom Anwender sehr viel Erfahrung und Intuition.

Der Erfindung liegt daher die Aufgabe zugrunde, ein Verfahren zum Auffinden von interessierenden Probenbereichen in einer stimulierbaren mikroskopischen Probe anzugeben, das gegenüber der bekannten Methode eine erhöhte Zuverlässigkeit, Reproduzierbarkeit und Genauigkeit aufweist und zudem schneller ist.

Die objektive Aufgabe wird durch ein Verfahren gelöst, das die Merkmale des kennzeichnenden Teils des Anspruchs 1 umfasst.

Eine weitere Aufgabe der Erfindung ist es eine Vorrichtung zum Auffinden von interessierenden Probenbereichen in einer stimulierbaren mikroskopischen Probe anzugeben.

Die Aufgabe wird gelöst durch eine Vorrichtung gemäß den Merkmalen des kennzeichnenden Teils des Anspruchs 8.

Die Erfindung hat den Vorteil, daß die Signal-zu-Rausch-Problematik durch Verwendung von zwei Farbstoffen nicht mehr wesentlich zum Tragen kommt; denn die Wahrscheinlichkeit des zufälligen Aufleuchtens von stimulationsspezifischen Farbstoffen unterschiedlicher Emissionswellenlänge in demselben Bildbereich ist klein genug, um ein sicheres Auffinden der interessierenden Probenbereiche nicht zu beeinflussen.

In ganz bevorzugter Weise erfolgt die Detektion des von den stimulationsspezifischen Farbstoffen ausgehenden Lichtes in zeitlicher Korrelation zum Auslösen der Stimulation. Hierzu wird das vom Detektor erzeugte Signal nur innerhalb eines Zeitfensters definierter Breite nach dem Auslösen der Stimulation von der elektronischen Verarbeitungseinheit akzeptiert bzw. berücksichtigt. Durch diese Maßnahme wird die Wahrscheinlichkeit von falschen Ergebnissen weiter reduziert.

Zur spektral empfindlichen Detektion kann eine Anordnung aus dichroitischen Filtern verwendet werden die das von den stimulationsspezifischen Farbstoffen ausgehenden Licht verschiedenen Detektoren zuleitet. Vorzugsweise wird jedoch ein Multibanddetektor verwendet. Eine besonders geeignete Ausführung eines Multibanddetektors ist aus der Patentschrift DE 4 330 347 bekannt.

Das Einbringen von mindestens zwei stimulationsspezifischen Farbstoffen kann das Einbringen von unterschiedlichen Fluorchromen, aber auch das gentechnische Einbringen von fluoreszierenden Eiweißen, insbesondere von GFP (green fluorescent protein), umfassen. Es ist auch möglich, die Untersuchung an transgenen Tieren vorzunehmen, die bereits die entsprechenden Gensequenzen aufweisen. Die Verwendung von GFP hat den Vorteil, daß die lebende Probe hiervon nicht beeinflußt wird; beispielseise ist das proteinbasierende GFP nicht toxisch. Die stimulationsspezifischen Farbstoffe können ferner Indikatoren, insbesondere Kalziumindikatoren, sein.

In vorteilhafter Weise erfolgt die Beleuchtung der Probe mit einer Strahlablenkeinrichtung, die den Beleuchtungslichtstrahl auf einer vorgegebenen Bahn über oder durch die Probe führt. Durch Feststellung der Ablenkstellung der Strahlablenkeinrichtung in zeitlicher Korrelation zur Detektion des von den stimulationsspezifischen Farbstoffen ausgehenden Lichtes, kann auf die räumliche Position der interessierenden Bereiche geschlossen werden. Die Strahlablenkeinrichtung beinhaltet vorzugsweise kippbare Spiegel, wobei die Kippung beispielsweise von Galvanometern bewirkt wird.

In einer bevorzugten Ausgestaltung bekommt der Benutzer die interessierenden Bereiche in einem Voransichtsbild auf einem Display oder einem Monitor angezeigt.

In einer ganz bevorzugten Ausgestaltung wird das erfindungsgemäße Verfahren unter teilweiser Verwendung eines Scanmikroskops, insbesondere eines konfokalen Scanmikroskops ausgeführt. Die erfindungsgemäße Vorrichtung kann ein Scanmikroskop, insbesondere ein konfokales Scanmikroskop beinhalten.

In der Zeichnung ist der Erfindungsgegenstand schematisch dargestellt und wird anhand der Figuren nachfolgend beschrieben. Dabei zeigen:
- Fig. 1: einen Ablaufplan des erfindungsgemäßen Verfahrens,
- Fig. 2: eine erfindungsgemäße Vorrichtung mit einem Konfokalmikroskop und
- Fig. 3: einen Anwendung des erfindungsgemäßen Verfahrens in der Zellbiologie.

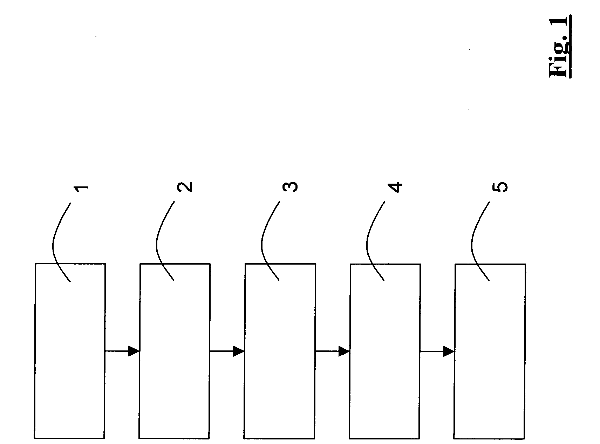

Der in Fig. 1 dargestellte Ablaufplan illustriert das erfindungsgemäße Verfahren. In einem ersten Schritt wird das Einbringen 1von mindestens zwei stimulationsspezifischen Farbstoffen, die Licht unterschiedlicher Wellenlängen emittieren, in die Probe durchgeführt. Dies können unterschiedliche Fluorchrome oder Nanokristalle sein. Das Einbringen kann auch das gentechnische Einbringen von fluoreszierenden Eiweißen, insbesondere von GFP (green fluorescent protein), umfassen. Die stimulationsspezifischen Farbstoffe können ferner Indikatoren, insbesondere Kalziumindikatoren, sein. Anschließend erfolgt das Beleuchten 2 der Probe oder eines Teils der Probe mit mindestens einem Beleuchtungslichtstrahl. Der Beleuchtungslichtstrahl kann hierbei aufgeweitet sein, so daß die Probe großflächig beleuchtet wird, oder es kann ein fokussierter Beleuchtungslichtstrahl verwendet werden, wobei dieser mit einer Strahlablenkeinrichtung auf einer vorgegebenen Bahn über oder durch die Probe geführt wird. In einem weiteren Schritt erfolgt das Auslösen 3 einer Stimulation. Hierbei kann es sich beispielsweise um das Anlegen eines Spannungspulses, um eine mechanische Manipulation oder eine Bestrahlung mit elektromagnetischen Wellen handeln. In anschließenden Schritt erfolgt die Detektion 4 des von den stimulationsspezifischen Farbstoffen ausgehenden Lichtes. Dieses kann beispielsweise mit dichroitischen Strahlteilern spektral selektiv aufgespalten werden, um von einzelnen Detektoren detektiert zu werden. Es ist auch möglich, die Detektion mit einem einzelnen Detektor, vorzugsweise einem Photomultiplier, vorzunehmen, wobei vor dem Detektor Licht, das nicht Emissionswellenlängen der stimulationsspezifischen Farbstoffe aufweist, ausgefiltert wird. Hierzu können Farbfilter oder Bandfilter verwendet werden. Ganz besonders bietet sich die Verwendung eines Multibanddetektors an. Der letzte Schritt beinhaltet das Ermitteln 5 der räumlichen Position der Bereiche innerhalb der Probe, von denen Licht von zumindest zwei unterschiedlichen Wellenlängen ausgeht, die Emissionswellenlängen der stimulationsspezifischen Farbstoffe sind. Dies kann beispielsweise indirekt durch Feststellung der Ablenkstellung der Strahlablenkeinrichtung in zeitlicher Korrelation zur Detektion des von den stimulationsspezifischen Farbstoffen ausgehenden Lichtes erfolgen.

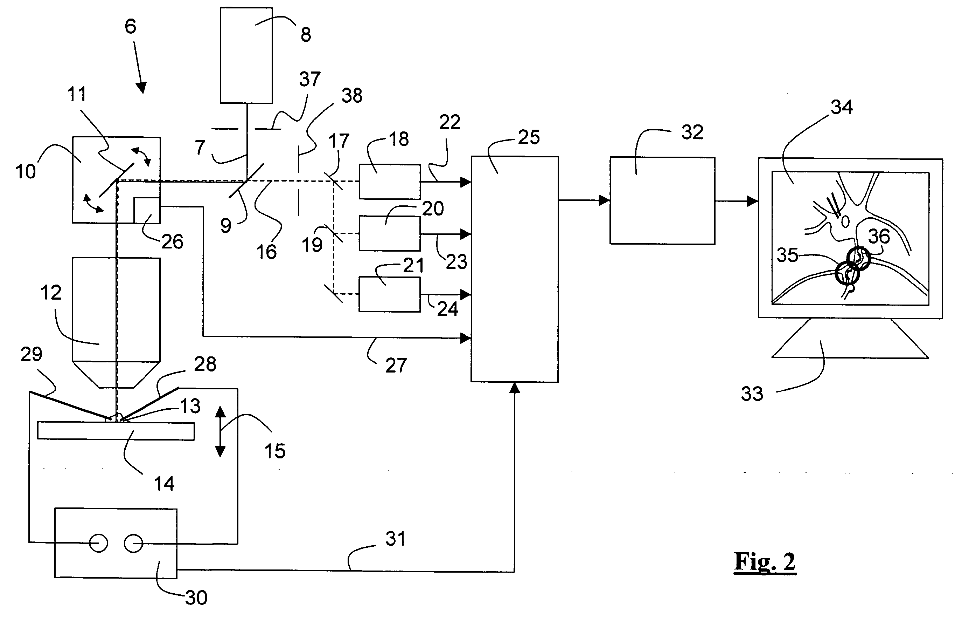

Die in Fig. 2 dargestellte Ausführung beinhaltet ein konfökales Scanmikroskop 6. Der Beleuchtungslichtstrahl 7 wird von einem Laser 8, der als Mehrlinien-Laser ausgeführt ist, erzeugt und von einem Strahlteiler 9 zum Strahlablenkeinrichtung 10 reflektiert, die einen kardanisch aufgehängten Scanspiegel 11 beinhaltet, der den Beleuchtungslichtstrahl 7 durch die Mikroskopoptik 12 hindurch über bzw. durch die Probe 13 führt. Die Probe 13 ist mit einem ersten und einem zweiten Indikatorfarbstoff präpariert, wobei die Indikatorfarbstoffe unterschiedliche Emissionswellenlängen aufweisen. Der Beleuchtungslichtstrahl 7 wird bei nicht transparenten Proben 13 über die Probenoberfläche geführt. Bei biologischen Proben 13 (Präparaten) oder transparenten Proben 13 kann der Beleuchtungslichtstrahl 7 auch durch das Probe 13 geführt werden. Dies bedeutet, dass verschiedene Schnittebenen der Probe 13 durch den Beleuchtungslichtstrahl 7 abgetastet werden können. Eine Auswahl der Schnittebene erfolgt durch Verschieben der Probe 13 mit Hilfe des verschiebbaren Probentisches 14 entlang der durch den Doppelpfeil angedeuteten Richtungen 15. Der vom Beleuchtungssystem 8 kommende Beleuchtungslichtstrahl 7 ist als durchgezogene Linie dargestellt. Das von der Probe 13 ausgehende Licht 16 gelangt durch die Mikroskopoptik 12 und über die Strahlablenkeinrichtung 10 zum Strahlteiler 9, passiert diesen und trifft auf den dichroitischen Strahlteiler 17, der nur Licht der Emissionswellenlänge des ersten Indikatorfarbstoffes passieren läßt. Dieses gelangt zu einem ersten Detektor 18, der als Photomultiplier ausgeführt ist. Das übrige Licht gelangt zu einem weiteren dichroitischen Strahlteiler 19, der nur Licht der Emissionswellenlänge des zweiten Indikatorfarbstoffes zum einem zweiten Detektor 20, der ebenfalls als Photomultiplier ausgeführt ist, reflektiert. Das Licht, das den weiteren dichroitischen Strahlteiler passiert wird einem dritten Detektor 21 zugeleitet. Das von der Probe 13 ausgehende Licht 16 ist als gestrichelte Linie dargestellt. In den Detektoren 18, 20, 21 werden elektrische, zur Leistung des jeweils ihnen zugeleiteten Lichtes, in proportionale Detektionssignale 22, 23, 24 umgewandelt, die an die Verarbeitungseinheit 25 weitergegeben werden. Die in der Strahlablenkeinrichtung 10 mit Hilfe eines induktiv oder kapazitiv arbeitenden Positionssensors 26 erfaßten Positionssignale 27 werden ebenfalls an die Verarbeitungseinheit 25 übergeben. Es ist für einen Fachmann selbstverständlich, dass die Position des Scanspiegels 11 auch über die Ansteuersignale ermittelt werden kann. In dem dargestellten Ausführungsbeispiel ist die Probe 13 mit zwei Mikroelektroden 28, 29 versehen. Diese sind elektrisch an ein Mittel zum Anlegen einer elektrischen Spannung 30, das als Pulsgenerator ausgeführt ist, angeschlossen mit dem ein Spannungspuls an die Probe 13 angelegt und somit eine Stimulation ausgelöst werden kann. Gleichzeitig mit dem Auslösen einer Stimulation wird ein elektrisches Signal 31 an die Verarbeitungseinheit 25 übergeben. Nach einem vorgegebenen Zeitintervall wird in der Verarbeitungseinheit 25 ein Zeitfenster definierter Dauer geöffnet, innerhalb dessen die Detektionssignale 22 und 23 verarbeitet werden. Detektionssignale 22, 23, die außerhalb des Zeitfensters eintreffen, haben mit hoher Wahrscheinlichkeit keinen Bezug zum Auslösen der Stimulation und werden verworfen. Das Detektionssignal 24 dient zur Gewinnung eines Übersichtbildes. In der Verarbeitungseinheit 25 werden die Daten ausgewertet und aufbereitet, so daß mit Hilfe eines PCs 32 mit einem angeschlossenem Display 33 ein Übersichtsbild 34 der abgetasteten Schnittebene der Probe 13 oder eine dreidimensionale Ansicht eines Volumens der Probe 13, in dem die interessierenden Bereiche 35, 36 markiert sind, darstellbar ist. Das bei einem konfokalen Scanmikroskop üblicherweise vorgesehene Beleuchtungspinhole 37 und das Detektionspinhole 38 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

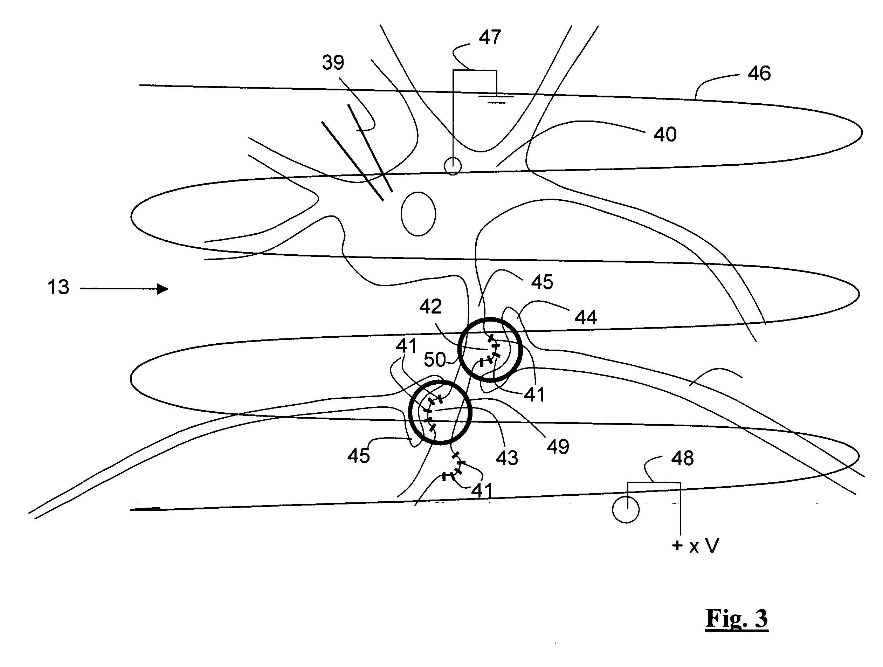

Fig. 3. illustriert eine Anwendung des erfindungsgemäßen Verfahrens in der Zellbiologie. Mit Hilfe einer Mikropipette 39 wird ein Kalzium-Indikator in die Nervenzelle 40 eingebracht. Der Kalzium-Indikator füllt die Zelle aus und ist nicht dargestellt. Die Spines der Nervenzelle sind durch genetische Manipulation mit GFP (Green Fluorescent Protein) 41 markiert. An die Spines 42, 43 sind die Synapsen 44, 45 anderer Nervenzellen angekoppelt. Der gesamte Probenschnitt wird fortlaufend mit dem Fokus eines Beleuchtungslichtstrahles von 488 nm, 514 nm und 568 nm Wellenlänge entlang der angedeuteten Scanbahn 46 beleuchtet. Über die Mikro-Patch-Clamp 47, und der Mikroelektrode 48 kann ein Spannungspuls zwischen dem Neuron und seiner Umgebung angelegt werden. Da die Nervenzelle 40 mit benachbarten Nervenzellen wie beschrieben in Kontakt steht, strömt durch den Spannungsstoß Kalzium an den Kontaktstellen 49, 50 ein, was anhand der Kalzium-Indikatoren und des GFP (das mit einer anderen Wellenlänge, als der Kalzium-Indikator fluoresziert) bei schneller rasterförmiger Beleuchtung detektiert werden kann. Die Zuverlässigkeit der Auffindung der Kontaktstellen 43, 44 ist sehr hoch; denn nur an den Orten kann eine Kontaktstelle 43, 44 vorliegen, an denen das GFP und der Kalzium-Indikator gleichzeitig aufleuchten. Zur Steigerung der Zuverlässigkeit erfolgt die Detektion des von der Probe ausgehenden Lichtes in zeitlicher Korrelation zum Auslösen der Stimulation. Die Position der Kontaktstellen 49, 50 wird abgespeichert und dem Benutzer angezeigt.

## Patentansprüche

1. Verfahren zum Auffinden von interessierenden Probenbereichen (35, 36) in einer stimulierbaren mikroskopischen Probe (13) **gekennzeichnet durch** folgende Schritte:
• Einbringen (1) von mindestens zwei stimulationsspezifischen Farbstoffen, die Licht unterschiedlicher Wellenlängen emittieren, in die Probe,
• Beleuchten (2) mindestens eines Teils der Probe (13) mit mindestens einem Beleuchtungslichtstrahl (7),
• Auslösen (3) einer Stimulation,
• Detektion (4) des von den stimulationsspezifischen Farbstoffen ausgehenden Lichtes (16) und
• Ermitteln (5) der räumlichen Position der Bereiche innerhalb des Teils der Probe, von dem Licht (16) von zumindest zwei unterschiedlichen Wellenlängen ausgeht, die Emissionswellenlängen der stimulationsspezifischen Farbstoffe sind.

2. Verfahren nach Anspruch 1, **dadurch gekennzeichnet, dass** die Detektion (4) des von den stimulationsspezifischen Farbstoffen ausgehenden Lichtes (16) in zeitlicher Korrelation zum Auslösen (3) der Stimulation erfolgt und dass das Einbringen (1) von mindestens zwei stimulationsspezifischen Farbstoffen das gentechnische Einbringen von fluoreszierenden Eiweißen, insbesondere von GFP (41), umfasst.

3. Verfahren nach Anspruch 2, **dadurch gekennzeichnet, dass** das Einbringen (1) von mindestens zwei stimulationsspezifischen Farbstoffen das Einbringen von Indikatoren, insbesondere von Kalziumindikatoren, umfaßt.

4. Verfahren nach Anspruch 1, **dadurch gekennzeichnet, dass** die Stimulation das Anlegen einer elektrischen Spannung beinhaltet, dass zur Beleuchtung der Probe ein Beleuchtungslichtstrahl (7) mit einer Strahlablenkeinrichtung (10) auf einer vorgegebenen Bahn (46) über oder durch die Probe (13) geführt wird, und dass zum Ermitteln (5) der räumlichen Position der Bereiche innerhalb der Probe (13) Daten über die Ablenkstellung der Strahlablenkeinrichtung (10) verwendet werden..

5. Verfahren nach Anspruch 1, **dadurch gekennzeichnet, dass** die Bereiche innerhalb der Probe (13) dem Benutzer auf einem Mittel zur Anzeige angezeigt werden.

6. Verfahren nach Anspruch 1, **dadurch gekennzeichnet, dass** es sich bei der Probe (13) um eine biologische Probe, insbesondere um Nervenzellgewebe, handelt , wobei die interessierenden Bereiche Kontaktstellen (49, 50) zwischen Nervenzellen sind.

7. Verfahren nach einem der Ansprüche 1 bis 6, **dadurch gekennzeichnet, dass** ein Scanmikroskop, insbesondere ein konfokales Scanmikroskop, verwendet wird.

8. Vorrichtung zum Auffinden von interessierenden Probenbereichen (35, 36) in einer stimulierbaren mikroskopischen Probe (13), die Vorrichtung mit einem Mittel zum Beleuchten mindestens eines Teils der Probe mit mindestens einem Beleuchtungslichtstrahl (7), einem Mittel zum Auslösen einer Stimulation und einem Mittel zur Detektion des von den stimulationsspezifischen Farbstoffen ausgehenden Lichtes, **dadurch gekennzeichnet, dass** Mittel zum Feststellen der räumlichen Position der Bereiche innerhalb der Probe, von denen Licht von zumindest zwei unterschiedlichen Wellenlängen ausgeht, die Emissionswellenlängen der stimulationsspezifischen Farbstoffe sind, vorgesehen sind und dass eine Verarbeitungseinheit (25) vorgesehen ist, die eine zeitliche Korrelation zwischen den von den Mitteln zur Detektion gelieferten Signalen und dem Auslösen der Stimulation herstellt.

9. Vorrichtung nach Anspruch 8, **dadurch gekennzeichnet, dass** die Mittel zur Detektion (18, 20, 21) des von den stimulationsspezifischen Farbstoffen ausgehenden Lichtes einen Multibanddetektor umfassen.

10. Vorrichtung nach Anspruch 8, **dadurch gekennzeichnet, dass** Mittel zum Anlegen einer elektrischen Spannung an mindestens einen Teil der Probe vorgesehen sind.

11. Vorrichtung nach Anspruch 8, **dadurch gekennzeichnet, dass** eine Strahlablenkeinrichtung (10) vorgesehen ist, die den Beleuchtungslichtstrahl (7) auf einer vorgegebenen Bahn (46) über oder durch die Probe (13) führt und dass ein Positionssensor (26) zur Feststellung der Ablenkstellung der Strahlablenkeinrichtung (10) vorgesehen ist.

12. Vorrichtung nach Anspruch 11, **dadurch gekennzeichnet, dass** die Strahlablenkeinrichtung (10) kippbare Spiegel (11) beinhaltet und vorzugsweise Galvanometer vorgesehen sind, die die Kippung bewirken.

13. Vorrichtung nach Anspruch 12, **dadurch gekennzeichnet, dass** Mittel zur Anzeige der interessierenden Bereiche vorgesehen sind.

14. Vorrichtung nach einem der Ansprüche 8 bis 13, **dadurch gekennzeichnet, dass** die Vorrichtung mit einem Scanmikroskop, insbesondere mit einem konfokalen Scanmikroskop (6), realisiert ist.
